Europäisches Patentamt

**European Patent Office**

**Office européen des brevets**

(11) Numéro de publication: **0 169 760**

**A1**

(12) # DEMANDE DE BREVET EUROPEEN

(21) Numéro de dépôt: **85401255.6**

(51) Int. Cl.⁴: **A 01 B 61/04**

(22) Date de dépôt: **24.06.85**

(30) Priorité: **28.06.84 FR 8410227**

(43) Date de publication de la demande:
**29.01.86 Bulletin 86/5**

(84) Etats contractants désignés:
**DE GB IT**

(71) Demandeur: **KONGSKILDE KONCERNSELSKAB A/S**
**No. 64 Skaelskorvej Lynge-Eskildstrup**
**DK-4180 Soro(DK)**

(72) Inventeur: **Boudin, Jean-Pierre**
**554 rue des Bransles**
**F-45560 Saint Denis En Val(FR)**

(74) Mandataire: **Lepeudry-Gautherat, Thérèse et al,**
**CABINET ARMENGAUD JEUNE CASANOVA et**
**LEPEUDRY 23 boulevard de Strasbourg**
**F-75010 Paris(FR)**

(54) **Dispositif perfectionné de sûreté pour outil agricole travaillant à grande profondeur.**

(57) Il comprend un châssis composé de poutres horizontales et transversales, au moins un organe travaillant (6) tel que dent ou soc, étant fixé sur une poutre transversale (1) par l'intermédiaire d'un support (2), caractérisé par le fait qu'il comprend, d'une part, des moyens de sûreté montés sur ledit châssis et reliés audit organe travaillant et, d'autre part, un accumulateur d'énergie coopérant avec lesdits moyens de sûreté.

Fig. 1

La présente invention concerne un dispositif perfectionné de sûreté pour outil agricole travaillant à grande profondeur, c'est-à-dire à une profondeur supérieure à celle des labours. Un tel dispositif peut être notamment monté sur les dents d'un sous-soleur.

Tous les outils agricoles, à dent ou à soc, qui travaillent à une profondeur supérieure à celle d'un labour sont soumis à des efforts importants. Aussi est-il nécessaire d'éviter que l'organe travaillant ne dépasse pas sa limite élastique. De plus à de telles profondeurs, la probabilité pour rencontrer un obstacle dur est importante : aussi, afin de ne pas casser l'organe travaillant, l'outil de travail doit-il comporter des dispositifs de sécurité assurant l'effacement de cet organe devant l'obstacle.

Généralement ces dispositifs de sécurité non seulement assurant l'effacement, mais également protégeant contre les risques de rupture, sont constitués par des goupilles qui cèdent dès qu'une certaine force est exercée dessus, permettant ainsi l'effacement de l'outil ou de la partie de l'outil ayant rencontré l'obstacle. De tels dispositifs ont pour principal inconvénient de nécessiter l'intervention de l'agriculteur pour remettre l'outil en condition de travail.

Depuis quelques années, on a vu apparaître des dispositifs de sûreté dits "non-stop" pour des outils à dents travaillant dans le sol à grande profondeur. Ces systèmes, hydrauliques ou mécaniques, assurent certes la protection totale de l'outil, mais présentent néanmoins l'inconvénient suivant lors de la remise en place de l'organe travaillant : l'angle d'attaque et la résistance moindre de cet organe et le mouvement d'avancement de l'outil sont des obstacles à la remise en place automatique de l'organe travaillant. Le plus souvent ces dispositifs n'autorisent pas un travail à une profondeur constante et régulière, car l'organe travaillant est presque toujours en mouvement.

Aussi un des buts de la présente invention est-il de fournir un dispositif de sûreté pour des outils agricoles à dents ou à socs, travaillant à grande profondeur.

Un autre but de l'invention est de fournir un tel dispositif de sûreté qui permet à l'outil agricole de toujours travailler à une profondeur constante.

Un but supplémentaire de l'invention est de fournir un dispositif de ce type qui permet une remise en place rapide de l'organe travaillant après son effacement.

Un objet de l'invention est un dispositif de sûreté qui soit simple et fiable.

Ces buts et cet objet, ainsi que d'autres qui apparaîtront par la suite, sont atteints par un dispositif perfectionné de sûreté pour outil agricole travaillant à grande profondeur qui comprend un châssis composé de poutres longitudinales et transversales, au moins un organe travaillant tel que dent ou soc, étant fixé sur une poutre transversale par l'intermédiaire d'un support. Selon la présente invention, le dispositif perfectionné de sûreté comprend, d'une part, des moyens de sûreté montés sur ce châssis et reliés à l'organe travaillant et, d'autre part, un accumulateur d'énergie coopérant avec ces moyens de sûreté.

Selon un premier mode de réalisation de l'invention, le support comporte vers l'arrière une branche supérieure et une branche inférieure de part et d'autre de laquelle sont disposés deux flasques entre lesquels est monté un organe travaillant maintenu en rotation par un axe et reposant, en position de travail ou de repos, sur un plat solidaire de ces deux flasques, et les moyens de sûreté comprennent une bielle qui est montée au voisinage d'une de ses extrémités sur la branche supérieure du support en rotation autour d'un axe et dont l'autre extémité comporte un galet appuyant sur cet organe travaillant et pouvant tourner autour d'un axe, et au moins une tige prenant appui sur cet axe, pouvant coulisser dans un axe situé à la partie avant du support et autour de laquelle est monté un ressort, l'angle α formé par le plan comprenant les axes et celui d'appui du galet sur l'organe travaillant étant inférieur à 90°, lorsque l'organe travaillant repose sur le plat.

Avantageusement cet angle α est inférieur à (90°-β), β correspondant à l'angle nécessaire pour vaincre les frottements.

De préférence, l'extrémité de la tige qui coulisse dans l'axe est filetée et est munie d'un écrou permettant de régler la précontrainte du ressort.

Avantageusement, le galet repose sur l'organe travaillant par l'intermédiaire d'une plaquette solidaire de celui-ci.

De préférence, ce galet et cette plaquette sont réalisés dans un même matériau.

Avantageusement, le dispositif de sûreté selon la présente invention comprend deux tiges munies chacune d'un ressort et situées de part et d'autre du support.

Selon ce premier mode de réalisation de l'invention, l'accumulateur d'énergie est constitué par un ressort situé à l'intérieur du ressort des moyens de sûreté et est de longueur inférieure à celui-ci.

Selon une variante de ce premier mode de réalisation, l'accumulateur d'énergie comprend au moins un barreau prenant appui sur le même axe que la tige des moyens de sécurité, pouvant coulisser dans un axe situé sur le bras supérieur et autour duquel est monté un ressort dont la longueur est inférieure à la distance entre ces deux axes.

De préférence, l'angle formé par le plan comprenant les axes des moyens de sûreté et celui comprenant les axes de l'accumulateur d'énergie est sensiblement égal à la moitié de l'angle α.

Selon un second mode de réalisation de la présente invention, le support est constitué par un bras de levier qui est articulé à l'une de ses extrémités sur une poutre transversale du châssis et dont l'autre extrémité est solidaire de l'organe travaillant, les moyens de sûreté étant constitués par un ressort à lames prenant appui sur cette poutre transversale et sur l'extrémité du bras de levier munie de l'organe travaillant.

Dans ce cas, l'accumulateur d'énergie comprend une tige perpendiculaire à ce bras levier et solidaire de celui-ci, traversant le ressort à lames et autour de laquelle est enroulé au-delà du ressort à lames un ressort pouvant prendre appui, d'une part, sur le ressort à lames et, d'autre part, sur une butée dont est munie cette tige, la longueur de ce ressort au repos étant inférieure à la distance entre cette butée et ce ressort à lames.

Avantageusement, cette tige est située sensiblement au milieu du bras de levier.

Selon une variante de ce second mode de réalisation, l'accumulateur d'énergie est constitué par une masse fixée sur cette poutre transversale et s'avançant au-dessus du bras de levier, contre laquelle bute en se déformant le ressort à lames lorsque celui-ci est sollicité.

La description qui va suivre et qui ne présente aucun caractère limitatif, est relative à un outil agricole du genre sous-soleur dont l'organe travaillant est une dent. Elle doit être lue en regard des figures annexées, parmi lesquelles :

- la figure 1 représente en perspective, vue de l'arrière une dent d'un sous-soleur comportant le dispositif perfectionné de sûreté selon la présente invention, cette dent étant en position de travail ;

- la figure 2 est un diagramme indiquant les efforts exercés sur le dispositif perfectionné de sûreté en fonction de la hauteur de la remontée de la dent lorsque celle-ci est déclenchée ;

- la figure 3 est une vue de côté de l'objet de la figure 1 ;

- la figure 4 représente en vue de côté la position prise par la dent lorsque son extrémité est au contact d'un obstacle ;

- la figure 5 représente schématiquement en vue de côté un dispositif perfectionné de sûreté monté sur un autre type de sous-soleur, la dent étant en position travail ;

- la figure 6 est, en vue de côté, la position prise par la dent lorsque son extrémité est au contact d'un obstacle ;

- la figure 7 représente schématiquement en vue de côté une variante de ce dispositif monté sur ce même type de sous-soleur ; et

- la figure 8 est, en vue de côté, la position prise par la dent lorsque son extrémité est au contact d'un obstacle.

Dans ce qui suit, les termes tels que avant, arrière, haut, bas, gauche, droit doivent être compris en regardant l'outil agricole de l'arrière par rapport à son sens d'avancement.

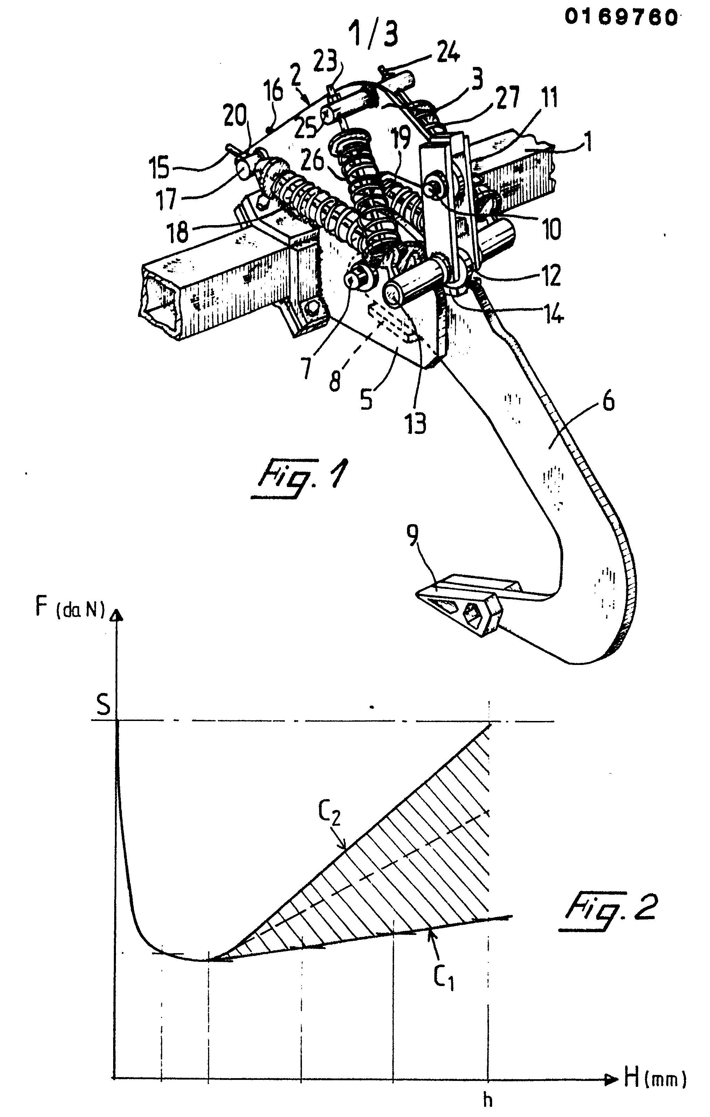

Ainsi qu'on peut notamment le voir sur la figure 1, un sous-soleur, outil agricole à dent travaillant à une profondeur supérieure à celle d'un soc de charrue, comporte comme tout appareil à dent un châssis composé de poutres longitudinales et transversales ou obliques formant un V. Les dents sont fixées sur une poutre transversale.

Dans l'exemple de réalisation représentée sur les figures 1, 3 et 4, sur la poutre transversale 1 est monté de façon connue en soi un support 2 comportant vers l'arrière une branche supérieure 3 de part et d'autre de laquelle sont disposés deux flasques 5 solidaires à leur partie inférieure d'une semelle 4. Entre ces deux flasques 5 est disposée une dent 6 maintenue, à une de ses extrémités, en rotation par un axe 7 et reposant, en position de travail ou de repos, sur un plat 8 soudé entre les deux flasques 5.

Cette dent 6 est une dent traditionnelle pour sous-soleur ; elle est munie, à son extrémité libre, d'un soc 9.

Sur le bras supérieur 3 du support 2 est montée par l'intermédiaire d'un axe 10 une pièce en U 11, l'ouverture du U étant tournée vers le bas. L'axe 10 est situé près du fond de cette pièce 11 qui par la suite est dénommée bielle. Entre les deux branches de la bielle 11 et au voisinage des extrémités libres des branches du U est disposé un galet 12 libre en rotation autour d'un axe 13. Ce galet 12 repose sur une plaquette 14 réalisée dans le même matériau que lui et disposée sur la dent 6.

Selon le mode de réalisation représenté sur ces figures, les moyens de sûreté selon la présente invention comprennent, outre la bielle 11 et le galet 12, deux tiges 15 et 16 qui sont situées de part et d'autre du support 2, dont une extrémité est solidaire en rotation de l'axe 13 et dont l'autre extrémité coulisse dans un axe 17 situé à la partie la plus avant du support 2 et au-dessus de la poutre transversale 1. L'angle α formé par le plan contenant les axes 10 et 13 et la plaquette 14 sur laquelle est en appui le galet 12 doit être inférieure à 90° et de préférence même à (90°-β), β étant l'angle nécessaire pour vaincre les frottements. Cet angle β est au moins égal à 5°.

Les moyens de sûreté comprennent également des ressorts 18 et 19 montés respectivement sur les tiges 15 et 16. Grâce à un écrou 20 et au fait que l'extrémité libre de la tige 15 est filetée, on peut régler la précontrainte du ressort 18. Il en est de même pour le ressort 19. La précontrainte des deux ressorts 18 et 19 est sensiblement la même.

Selon ce premier mode de réalisation de l'invention, le dispositif perfectionné de sûreté, outre les moyens de sûreté décrits ci-dessus, comporte un accumulateur d'énergie comprenant deux barreaux 23 et 24 qui prennent appui sur le même axe 13 que les tiges 15, 16 des moyens de sûreté qui peuvent coulisser dans un axe 25 situé sur le bras supérieur 3 et autour de chacun desquels sont montés des ressorts 26 et 27 respectivement. La longueur de ces ressorts 26 et 27 est inférieure à la distance entre les deux axes 13 et 25. Dans cet exemple de réalisation où les moyens de sécurité comportent deux tiges 15 et 16, l'accumulateur d'énergie est donc constitué de deux ensembles barreaux-ressorts situés de part et d'autre du bras supérieur 3.

L'angle formé par le plan comprenant les deux axes 13 et 17 des moyens de sûreté et celui comprenant les deux axes 13 et 5 de l'accumulateur d'énergie est de préférence sensiblement égal à la moitié de l'angle α.

Selon une variante, chaque ressort de l'accumulateur d'énergie est disposé à l'intérieur du ressort corres-

pondant des moyens de sûreté mais sa longueur est inférieure à celle de celui-ci.

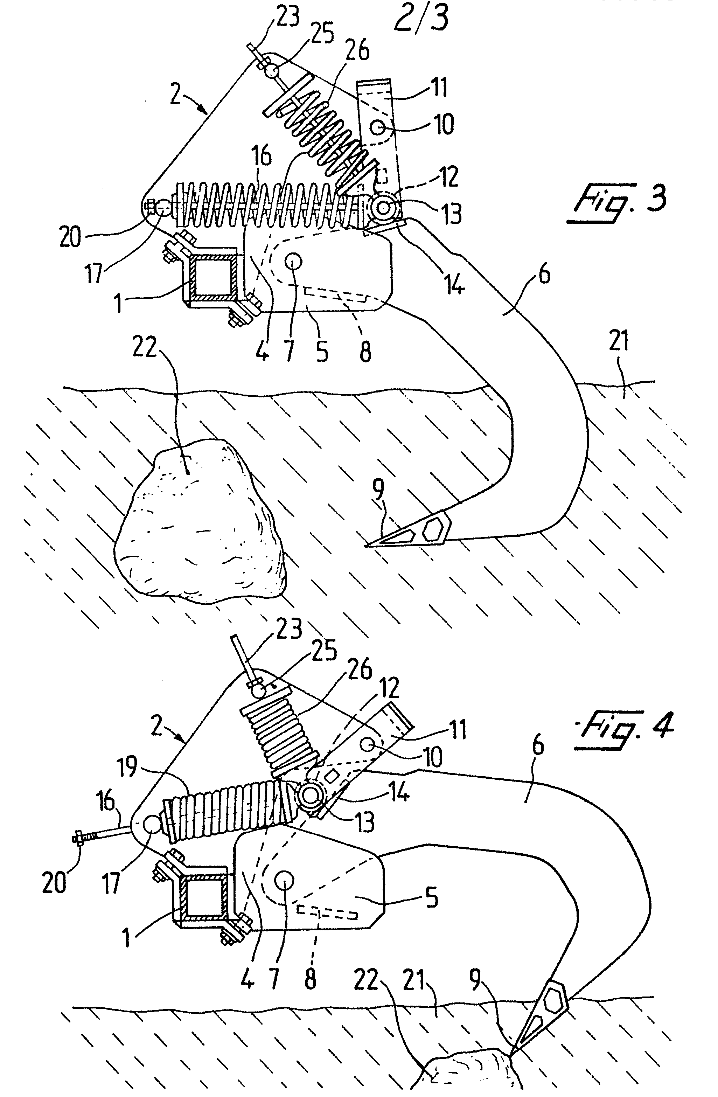

Le fonctionnement d'un tel dispositif perfectionné
de sûreté sera décrit en se référant aux figures 3 et 4 : on
supposera que la dent 6 est au départ en position de travail
comme représenté sur la figure 3.

Dans ce cas, la dent 6 est enfoncée dans le sol 21,
les ressorts 18 et 19 des moyens de sûreté sont à leur longueur maximum, les ressorts 26 et 27 de l'accumulateur d'énergie ne sont nullement sollicités, et l'angle α est inférieur à (90°-β).

Lorsque la pointe du soc 9 rencontre un obstacle 22,
représenté sur ces figures par une grosse pierre, la force
de poussée exercée sur cette pointe du fait de l'avancement
du sous-soleur, est transmise par l'intermédiaire de la
plaquette 14 sur le galet 12 : ceci entraîne une compression
des ressorts 18 et 19 des moyens de sûreté, puis après un
certain laps de temps correspondant à un certain pivotement
de la dent 6 autour de son axe 7, une compression des ressorts
26 et 27 de l'accumulateur d'énergie, et par là même une variation importante de l'angle α. En effet, du fait de la force
exercée sur le galet 12 par la dent 6 par l'intermédiaire
de la plaquette 14, la bielle 11 pivote vers l'avant autour
de son axe 10 ce qui entraîne d'abord la compression des
ressorts 18 et 19, puis simultanément celle des ressorts 26
et 27. Les tiges 15 et 16 des moyens de sureté et les
barreaux 23 et 24 de l'accumulateur d'énergie coulissent
respectivement dans les axes 17 et 25. Dans ces conditions
la pointe du soc 9 peut décrire librement le contour de
l'obstacle 22, la dent 6 pouvant ainsi s'escamoter ou s'effacer.

Dès qu'une force moindre est exercée
sur la pointe du soc 9, la dent 6 est ramenée en position
de travail par la décompression simultanée des ressorts 18
et 19 des moyens de sûreté et 26 et 27 de l'accumulateur
d'énergie entraînant par suite un mouvement vers l'arrière
et vers le bas de la bielle 11. Le réenclenchement de la
dent 6 comporte deux phases : une première dans laquelle agissent simultanément les ressorts des moyens de sûreté et ceux de l'accumulateur d'énergie, et une seconde dans laquelle seuls agissent les ressorts des moyens de sûreté puisque ceux de l'accumulateur d'énergie ont une longueur inférieure à la course de leur tige support.

La dent 6 reprend donc sa position dès que l'obstacle 22 est franchi : l'inertie emmaganisée dans les ressorts est tellement importante que la remise en place de tout le système, ou réenclenchement, est instantanée.

Sur la figure 2, est représentée la courbe des efforts à l'extrémité de la dent 6 : les ordonnées indiquent les efforts (F en daN) en bout de dent, et les abscisses la hauteur (H en mm) de remontée de la dent lors du déclenchement du dispositif perfectionné de sûreté. L'ordonnée S correspond à l'effort minimum entraînant le déclenchement du système. La courbe $C_1$ est celle décrite lorsque seuls agissent les seuls moyens de sûreté ; la courbe $C_2$ est celle décrite lorsque l'outil agricole est muni du dispositif selon l'invention. On peut noter que le réenclenchement de la dent est nettement plus rapide dans ce dernier cas grâce à l'énergie additionnelle emmaganisée dans l'accumulateur d'énergie et libérée totalement au début du réenclenchement.

Un autre avantage d'un tel dispositif est de permettre des efforts très importants au niveau du soc 9 sans risquer de détériorer la dent 6.

L'effort appliqué sur le galet 12 dirigé perpendiculairement à la plaquette 14 est décomposé en une force exercée suivant le plan des axes 13 et 17 et une force exercée dans le plan des axes 10 et 13.

L'angle qui est maximum en position de travail normal, diminue considérablement dès que le système de sûreté est sollicité : ceci fait varier instantanément la direction et l'intensité des forces ci-dessus et par ce fait même la réaction à l'extrémité de la partie travaillante.

Du fait de l'action instantanée ou tout au moins quasi-instantanée des ressorts, il n'y a aucune vibration de l'outil et la dent travaille à une profondeur constante et régulière. De plus les mouvements d'une dent n'ont aucune influence sur le travail des autres dents portées par le même châssis du fait des efforts dégressifs fournis par le dispositif perfectionné de sûreté de la dent considérée.

Le dispositif perfectionné de sûreté selon la présente invention peut ne comporter qu'une tige 15 et un ressort 18 ainsi qu'un barreau 23 et un ressort 26. La partie supérieure du support 2 peut être dans ce cas par exemple constituée de deux flasques entre lesquels seraient disposés les moyens de sûreté et l'accumulateur d'énergie.

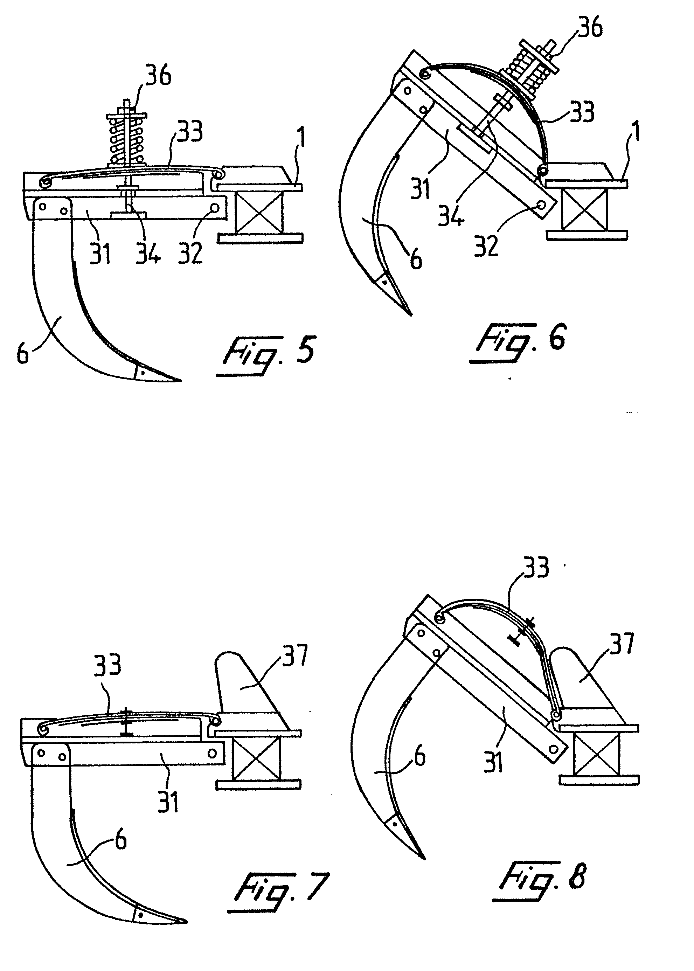

Un autre exemple de réalisation de la présente invention est représenté aux figures 5 à 8 : dans ce cas, la dent 6 du sous-soleur est solidaire de l'extrémité d'un bras de levier 31 dont l'autre extrémité est articulée autour d'un axe 32 situé sur la poutre transversale 1.

Les moyens de sûreté sont constitués par un ressort à lames 33 dont une extrémité est fixée sur la poutre transversale 1 et l'autre sur le bras de levier 31 au niveau de la fixation de la dent 6. L'accumulateur d'énergie, dans cet exemple de réalisation, comprend une tige 34 disposée perpendiculairement au bras de levier 31 dont elle est solidaire, et traversant le ressort à lames 33, et autour de laquelle est monté un ressort 35 reposant sur le ressort à lames 33. La tige 34 comporte une butée 36 : la distance entre cette butée et le ressort à lames 33 est supérieure à la longueur du ressort 35 au repos.

Lorsque la pointe de la dent 6 rencontre un obstacle, la force de poussée exercée sur cette pointe du fait de l'avancement du sous-soleur, entraîne un pivotement vers le haut du bras de levier 31 autour de son axe 32 : ceci a pour conséquence un bombement du ressort à lames 33, ce qui correspond à sa compression. Au bout d'un court laps de temps, la partie bombée du ressort à lames fait buter le ressort 35 de l'accumulateur d'énergie contre la butée 36, entraînant par là même la compression de ce ressort.

Dès qu'aucune force de poussée n'est plus exercée sur la pointe de la dent 6 , le ressort à lames 33 et le ressort 35 de l'accumulateur d'énergie se détendent simultanément provoquant par là même un pivotement vers le bas de l'ensemble bras de levier 31-dent 6 autour de l'axe 32. Comme dans l'exemple de réalisation précédent, le réenclenchement de la dent 6 comporte les deux mêmes phases : la première où les deux ressorts agissent simultanément, et la seconde où seul le ressort à lames 33 agit.

Sur ce type de sous-soleur, on peut prévoir en variante, un autre type d'accumulateur d'énergie. Celui-ci est constitué par une butée 37 disposée sur la poutre transversale 1 et qui est en léger surplomb au-dessus du ressort à lames 33.

Lorsque le ressort à lames 33 est comprimé sous l'effet d'une force de poussée exercée sur l'extrémité de la dent 6 , celui-ci vient en appui contre cette butée 37 ce qui entraîne une déformation de son bombement : cette déformation provoque une répartition non linéaire de l'énergie accumulée dans le ressort à lames 33 notamment en privilégiant la partie la plus proche de l'extrémité du bras de levier 31 comportant la dent 6 . Ce type de répartition provoque une accélération du pivotement vers le bas comparable à celui décrit précédemment.

Un dispositif de sûreté selon la présente invention ne nécessite plus l'intervention de l'homme pour son réarmement et permet à l'outil agricole à dent le comportant de travailler à une profondeur constante : ce qui se passe au niveau d'une dent n'a aucune influence sur les autres dents de cet outil.

REVENDICATIONS

1. Dispositif perfectionné de sûreté pour outil agricole travaillant à grande profondeur qui comprend un châssis composé de poutres horizontales et transversales, au moins un organe travaillant tel que dent ou soc, étant fixé sur une poutre transversale par l'intermédiaire d'un support, caractérisé par le fait qu'il comprend, d'une part, des moyens de sûreté montés sur ledit châssis et reliés audit organe travaillant et, d'autre part, un accumulateur d'énergie coopérant avec lesdits moyens de sûreté.

2. Dispositif selon la revendication 1, caractérisé par le fait que ledit support comporte vers l'arrière une branche supérieure (3) de part et d'autre de laquelle sont disposés deux flasques (5) solidaires à leur partie inférieure d'une semelle (4) et entre lesquelles est montée un organe travaillant (6) maintenu en rotation par un axe (7) et reposant, en position de travail ou de repos, sur un plat (8) solidaire des deux flasques (5) et par le fait que lesdits moyens de sûreté comprennent une bielle (11) qui est montée au voisinage d'une de ses extrémités sur ladite branche supérieure (3) du support (2) en rotation autour d'un axe (10) et dont l'autre extrémité comporte un galet (12) appuyant sur ledit organe travaillant (6) et pouvant tourner autour d'un axe (13), et au moins une tige (15) prenant appui sur ledit axe (13), pouvant coulisser dans un axe (17) situé à la partie avant dudit support (2) et autour de laquelle est monté un ressort (18), l'angle α formé par le plan comprenant les axes (10) et (13) et celui d'appui dudit galet (12) sur ledit organe travaillant (6) étant inférieur à 90°, lorsque ledit organe travaillant repose sur le plat (8).

3. Dispositif selon la revendication 2, caractérisé par le fait que ledit angle α est inférieur à (90°-β), β étant l'angle nécessaire pour vaincre les frottements.

4. Dispositif selon les revendications 2 ou 3, caractérisé par le fait que l'extrémité de ladite tige (15)

qui coulisse dans ledit axe (17) est filetée et est munie d'un écrou (20) permettant de régler la précontrainte dudit ressort (18).

5. Dispositif selon l'une quelconque des revendications 2 à 4, caractérisé par le fait que ledit galet (12) repose sur l'organe travaillant (6) par l'intermédiaire d'une plaquette (14) solidaire de celui-ci.

6. Dispositif selon la revendication 5, caractérisé par le fait que ledit galet (12) et ladite plaquette (14) sont dans un même matériau.

7. Dispositif selon l'une quelconque des revendications 2 à 6, caractérisé par le fait qu'il comprend deux tiges (15) et (16) munies respectivement de ressorts (18) et (19), situées de part et d'autre du support (2).

8. Dispositif selon l'une quelconque des revendications 1 à 7, caractérisé par le fait que ledit accumulateur d'énergie est constitué par un ressort situé à l'intérieur dudit ressort (18) desdits moyens de sûreté, de longueur inférieure à celui-ci.

9. Dispositif selon la revendication 8, caractérisé par le fait que ledit accumulateur d'énergie est constitué par autant de ressorts que lesdits moyens de sûreté en comprennent.

10. Dispositif selon l'une quelconque des revendications 1 à 7, caractérisé par le fait que ledit accumulateur d'énergie comprend au moins un barreau (23) prenant appui sur le même axe (13) que la tige (15) desdits moyens de sûreté, pouvant coulisser dans un axe (25) situé sur ledit bras supérieur (3) et autour duquel est monté un ressort (26) dont la longueur est inférieure à la distance entre lesdits deux axes (13) et (25).

11. Dispositif selon la revendication 10, caractérisé par le fait que l'angle formé par le plan comprenant les axes (10) et (13) desdits moyens de sûreté et celui comprenant les axes (13) et (25) dudit accumulateur d'énergie est sensiblement égal à la moitié dudit angle α.

0169760

12. Dispositif selon les revendications 10 et 11, caractérisé par le fait que ledit accumulateur d'énergie comprend autant de barreaux (23) et de ressorts (25) que lesdits moyens de sûreté comprennent de tiges (15).

13. Dispositif selon la revendication 1, caractérisé par le fait que ledit support est constitué par un bras de levier (31) qui est articulé à une de ses extémités autour d'un axe (32) situé sur une poutre transversale (1) et dont l'autre extrémité est solidaire dudit organe travaillant (6) et que lesdits moyens de sûreté sont constitués par un ressort à lames (33) qui prend appui sur ladite poutre transversale (1) et sur l'extrémité dudit bras de levier (31) munie de l'organe travaillant (6).

14. Dispositif selon la revendication 13, caractérisé par le fait que ledit accumulateur d'énergie comprend une tige (34) perpendiculaire audit bras de levier (31) et solidaire de ce dernier, traversant ledit ressort à lames (33) et autour de laquelle est enroulé, au-delà dudit ressort à lames, un ressort (35) qui peut prendre appui, d'une part, sur ledit ressort à lames (33) et sur une butée (36) dont est munie ladite tige (34), la longueur dudit ressort (35) au repos étant inférieure à la distance entre ladite butée (36) et ledit ressort à lames (33).

15. Dispositif selon la revendication 14, caractérisé par le fait que ladite tige (34) est située sensiblement au milieu dudit bras de levier (31).

16. Dispositif selon la revendication 13, caractérisé par le fait que ledit accumulateur d'énergie est constitué par une masse formant butée (37) fixé sur ladite poutre transversale (1) et s'avançant au-dessus dudit bras de levier (31), contre laquelle butte en se déformant ledit ressort à lames (33) lorsque celui-ci est sollicité.

Fig. 1

Fig. 2

0169760

1/3

_Fig. 3_

_Fig. 4_

_Fig._ 5

_Fig._ 6

_Fig._ 7

_Fig._ 8

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| X | FR-A-2 389 311 (VAN DER LELY) <br> * Page 1, ligne 32 - page 7, ligne 30; figures 1-5 * | 1 | A 01 B 61/04 |
| X | DE-C- 329 098 (MASCHINENFABRIK SCHEFFELDT) <br> * En entier * | 1 | |
| A | | 2,4,5, 9 | |
| A | US-A-4 249 615 (FRIGGSTAD) | 1,9,16 | |
| A | US-A-3 642 074 (GEURTS) | | |

| | | | DOMAINES TECHNIQUES RECHERCHES (Int. Cl.4) |
|---|---|---|---|
| | | | A 01 B |

Le présent rapport de recherche a été établi pour toutes les revendications

| Lieu de la recherche | Date d'achèvement de la recherche | Examinateur |
|---|---|---|
| LA HAYE | 02-09-1985 | VERDOODT S.J.M. |